# EUROPEAN PATENT SPECIFICATION

(11) **EP 3 784 744 B1**
(45) Date of publication and mention of the grant of the patent: **02.10.2024**
(21) Application number: 19792360.0
(22) Date of filing: 25.04.2019
(51) Int. Cl.: C09J 103/02, B32B 29/08, C08L 1/00, C08L 3/02, C09J 101/00, C08L 1/02, C09J 101/02

(54) **A METHOD TO PRODUCE AN ADHESIVE COMPRISING STARCH AND MICROFIBRILLATED CELLULOSE, A CORRUGATED BOARD AND AN ADHESIVE**
VERFAHREN ZUR HERSTELLUNG EINES KLEBSTOFFES AUS STÄRKE UND MIKROFIBRILLIERTER CELLULOSE, WELLPAPPE UND KLEBSTOFF
PROCÉDÉ DE PRODUCTION D'UN ADHÉSIF COMPRENANT DE L'AMIDON ET DE LA CELLULOSE MICROFIBRILLÉE, PANNEAU ONDULÉ ET ADHÉSIF

(30) Priority: 25.04.2018 SE 1850499
(43) Date of publication of application: 03.03.2021
(73) Proprietor: Stora Enso Oyj, 00101 Helsinki (FI)
(72) Inventor: BACKFOLK, Kaj, 53100 Lappeenranta (FI); HEISKANEN, Isto, 55100 Imatra (FI); SAUKKONEN, Esa, 53850 Lappeenranta (FI)
(74) Representative: Steinrud, Henrik
(86) International application number: PCT/IB2019/053410
(87) International publication number: WO 2019/207516

(56) References cited:
- WO-A1-2017/108325
- CN-A- 107 286 865
- CN-A- 107 779 122
- CN-B- 103 590 281
- CN-B- 105 542 676
- US-A1- 2006 108 081
- US-A1- 2010 291 822
- US-A1- 2015 090 156
- US-A1- 2015 203 667
- US-A1- 2017 204 567
- JIANG, W. ET AL.: "Effect of cellulose nanofibrils on the bond strength of polyvinyl acetate and starch adhesives for wood", BIORESOURCES, vol. 13, no. 2, 1 January 2018 (2018-01-01), pages 2283 - 2292, XP055647039, ISSN: 1930-2126

## Description

### Technical field

The present invention relates to a method to produce an adhesive for a corrugated board wherein the adhesive comprises starch and high solid content microfibrillated cellulose. The invention also relates to a corrugated board comprising said adhesive and to the adhesive produced according to the method.

### Background

Corrugated board is a packaging material which can be converted to different types of packaging solutions. The corrugated board is a fiber based material comprising a corrugated medium (fluting), also called corrugated medium or medium, and at least one flat liner or linerboard attached onto a surface of the fluted medium, thus forming a sandwich structure. The central paper layer, called corrugated medium, is formed by using heat, moisture and pressure, into a corrugated shape using a corrugator. One or two flat papers, called liners, are glued to the tips of the corrugated medium. The sandwich can be formed in different ways such as in single, double, and triple walls as described in Kirwan M., J., Paper and Paperboard. Packaging Technology, Blackwell Publishing 2005.

There are different kinds of corrugated board qualities, and these might comprise different types of liners and corrugated medium. Examples of different types of liners are kraftliner, white top kraftliner and testliner. Kraftliner is typically produced from kraft pulp that can be bleached or unbleached and comprises one or more layers wherein top layer is often optimized to provide good printing surface and good moisture resistance. Testliner is mainly produced from recycled old corrugated board and is mostly done in two layers. Whereas first layer usually always comprise recycled fibers, the top layer might contain e.g. virgin fibers in order to provide a better quality. For corrugated mediums recycled or semichemical fibers are typically used.

Common for all corrugated board qualities is that they are made of high portion a renewable materials which makes it a sustainable packaging material compared to many other packaging materials.

The corrugated medium is joined or adhered to a flat liner with an adhesive. A second adhesive application step can be used to treat the corrugated medium on the backside prior to attaching a second liner to produce a double face corrugated board is formed. Starch based adhesives are most commonly used in the manufacturing of corrugated boards. The starch based adhesives are typically 4 component systems comprising of carrier or cooked starch, a raw starch component, caustic soda, and borax. The physical properties and chemical reactivity of the final adhesive can be adjusted by various means such as using modified starch, by changing borax concentration or using other cross-linkers.

A common problem with produced corrugated boards is that they tend to curl up or down. This problem is also called warp. The most common reason for corrugated boards to curl is due to a moisture imbalance between the liners. Curl often leads to problems in the converting step of the corrugated board where the board is jammed and cannot pass through the converting machine thereby causing production losses. One way to control the curl of corrugated board is to control the moisture content during production of the board. This is for example described in US4134781. Another way to control or reduce curl is to carefully select the adhesive used and method of application of adhesive. This is for example described in WO11160049 which describes a certain type of adhesive used in order to reduce the curling of the board. The problem with curl or warp is an increasing problem when more light-weight products are produced.

US 2010/291822 A1 discloses a composite with adhesive properties, comprising: gelatinized starch (i.e., starch swollen by alkali or temperature treatment or by cooking); up to 60 wt% MFC based on the total weight of starch and MFC.

Another common problem with corrugated board is the wash-board effect, also called wash-boarding. This effect is more pronounced for corrugated board comprising lower grammage liner in the top layer/s. Wash-boarding is an undesired effect resulting from the corrugated board manufacturing process which might become even more visible after printing the surface. In addition to differences in optical print densities, it might also decrease the print quality. The wash-board effect is usually associated as an effect of the interfacial adhesive spreading/absorption and shrinkage of the adhesive between the liner and the fluting during drying. As the adhesive dries the liner may take up the silhouette of the flutes. This uneven surface of the produced corrugated board is thus called wash-boarding. The degree of wash-boarding depends on many different features, e.g. the stiffness of the individual corrugated board materials, the solid content of the adhesive used as well as the amount of adhesive applied. The wash-board effect is increased if an excess of adhesive is applied during production of the corrugated board. There is often a balance between applying too little adhesive which will lead to inadequate lamination and too much adhesive which will increase the washboard effect. Also, if the adhesive has a high solid content of starch and a high viscosity the washboard effect can be decreased. However, the bonding strength decreases when higher amount of starch is used in the adhesive.

Furthermore, by trying to make products more light-weight, i.e. by decreasing the grammage of the board, the application of the glue becomes more demanding and problem with product properties such as wash-boarding, flatness, warp and printability are increasing. Thus, wash-boarding can be identified both for unprinted surfaces but it also causes poor printing quality since the undulating surface is not optimal for printing and which leads to that the printed surface gets a very uneven appearance.

There is thus a need to solve the problems mentioned above for a corrugated board. More preferably, the solution should also be both cost-effective and environmental friendly.

### Summary

It is an object of the present invention to produce an adhesive and a corrugated board which eliminates or alleviates at least some of the disadvantages of the prior art. More specific objects include providing an adhesive that makes it possible to produce a corrugated board with reduced washboard effect and curl tendency.

The invention is defined by the appended independent claims. Embodiments are set forth in the appended dependent claims and in the following description.

The present invention relates to a method for the production of an adhesive wherein said method comprise the following steps: providing a suspension comprising starch, swelling the starch by alkali or temperature treatment or by cooking the starch suspension to form a starch suspension, providing a suspension comprising microfibrillated cellulose which suspension has a solid content above 10%-by weight, adding the suspension comprising microfibrillated cellulose to the suspension comprising starch either before or during the swelling or the cooking of the starch or to the formed starch suspension to produce the adhesive. It has surprisingly been found that it was possible to produce an adhesive for corrugated board by using high consistency MFC. It was found that both the curl and washboard tendencies are strongly reduced when the adhesive according to the invention is used in a corrugated board.

The adhesive preferably comprises starch in an amount above 50 wt% of the total solid content of the adhesive, more preferably above 70 wt%. The adhesive preferably comprises microfibrillated cellulose in an amount between 0.5-50 wt-% of the total solid content of the adhesive, preferably between 5-40 wt-% or even more preferred between 10-30 wt-% of the total solid content of the adhesive. The optimal amount of starch and MFC in the adhesive depends for example on the quality of the MFC used, the type of starch used and the desired properties of the final adhesive to be achieved.

The starch in the adhesive is preferably a native starch.

The microfibrillated cellulose of the suspension is preferably produced by enzymatic treatment. The microfibrillated cellulose may be produced by combined enzymatic and mechanical treatment. It has been found that an adhesive with stable properties can be produced when a high consistency enzymatic produced microfibrillated cellulose is used.

The temperature of the added microfibrillated cellulose is preferably above 30°C, preferably above 50°C. It is important that the temperature of the suspension comprising microfibrillated cellulose is increased when the suspension is added during or after cooking of the starch, i.e. when the temperature of the starch also is increased. In this way the adhesive produced is more homogeneous which leads to a better quality adhesive that makes it possible to produce a corrugated board having reduced wash-boarding and curl problems.

The present invention further relates to a corrugated board comprising corrugated medium and a liner and an adhesive arranged to attach the fluted corrugated medium to the liner wherein the adhesive comprises starch and a high consistency microfibrillated cellulose characterized by that the microfibrillated cellulose of the adhesive has a solid content above 10% by weight.

The corrugated board preferably comprises adhesive in an amount of 2-20 g/m² (dry).

The liner of the corrugated board preferably has a grammage below 160 g/m². It has been found possible to reduce the weight of the corrugated board produced without achieving problems with wash-boarding and/or curl.

The present invention also relates to an adhesive wherein said adhesive comprises starch and a high consistency microfibrillated cellulose characterized in that the microfibrillated cellulose has a solid content above 10% by weight.

The adhesive preferably comprises between 0.1-50 wt-% of microfibrillated cellulose based on total dry solid content of the adhesive, preferably between 5-40 wt-% or even more preferably between 10-30 wt-%. The microfibrillated cellulose preferably is produced by enzymatic treatment.

The adhesive preferably comprises saccharides in an amount of 0.1-15% by weight based on the amount of microfibrillated cellulose.

The adhesive preferably has a solid content of 10-45 wt-%, preferably between 20-40% by weight. It was found that it was possible to produce an adhesive comprising microfibrillated cellulose having a high dry content with improved stability and which will give less penetration into the applied produced.

### Detailed description

The present invention relates to a method for production of an adhesive wherein the method comprises the steps of: providing a suspension comprising starch, swelling the starch by alkali or temperature treatment or by cooking the starch suspension to form a starch suspension, providing a suspension comprising microfibrillated cellulose which suspension has a solid content above 10%-by weight, adding the suspension comprising microfibrillated cellulose to the suspension comprising starch either before or during the swelling or the cooking of the starch or to the formed starch suspension to produce the adhesive.

The adhesive is especially suitable for the production of corrugated board since it solves many of the problems in connection with corrugated board, such as wash-boarding, warp etc. However, the adhesive may also be used for other end applications where starch based adhesives normally are used, e.g. lamination of paper, paperboard or similar end uses.

The use of high consistency microfibrillated cellulose in adhesive for corrugated board has been shown to influence the viscosity behavior of the adhesive at low shear rates which we believe have great impact on adhesive setting behavior and spreading in the interface between the corrugated medium and the liner. The ability to control flow behavior of the adhesive at low shear rates, for example without changing the flowability at higher shear rates is important for adhesive hold-out on absorptive or porous substrates such as corrugated papers and/or liners. Furthermore, the rheological properties of the adhesive are also influenced in a positive way by the addition of high consistency MFC. Water retention value is another important parameter that surprisingly was found to be improved by the use of high consistency MFC in the adhesive. The water retention of the adhesive is one way to measure the ability of the adhesive to stay on the surface of the substrate and not penetrate too deep into the substrate. The water retention value is a measure of how much liquid that is transferred from the adhesive to the substrate. The use of high consistency MFC showed that the water retention value was improved leading to reduced problems with washboarding and warp for corrugated boards. By the present invention it was surprisingly found that and adhesive with low viscosity, good water retention value at high solid content can be produced.

By utilizing a high consistency MFC during production of the adhesive in accordance to the present invention, it was surprisingly found that it was possible to produce an adhesive with increased dry content but with good stability and less gelling, i.e. retrogradation problems. The solid content of the suspension comprising MFC is above 10% by weight, preferably between 10-30% by weight. Microfibrillated cellulose has typically strong gel-forming properties and it is difficult to handle MFC suspensions with high dry contents, e.g. dry contents above 10%. It may be possible to either produce a high consistency MFC suspension or to dewater a suspension comprising MFC prior to use for the production of the adhesive. It was found that by using a high consistency MFC the solid content of the adhesive could be increased without negative affect of the rheological properties of the adhesive. Consequently, less amount of water needs to be added to the corrugated board. It is thus possible to achieve the advantages with the use of MFC, i.e. improved adhesive spreading and setting onto/into the corrugated board, without the disadvantages with addition of too much water. It was found that the adhesive according to the present invention will strongly reduce the wash-boarding effect and reduce the curl or warp tendencies of the corrugated board.

Another benefit with the present invention is that it is possible to increase the amount of microfibrillated cellulose in the adhesive which will lead to better mechanical stability of the adhesive, especially at humid conditions. Also, the stability at different pH has been shown to improve. It has also been found that by increasing the amount of MFC in the adhesive the amount of borax or other additives can be reduced. Instead more environmental friendly cross-linkers can be used. Consequently, a more environmental friendly adhesive is produced.

The suspension comprising microfibrillated cellulose may also comprise a hydrogen blocking chemical, i.e. an additive that till facilitate the production of MFC at higher solids. The hydrogen blocking chemical may be starch, carboxymethyl cellulose (CMC), hemicellulose or water soluble polymers such as polyvinyl alcohol (PVA) or polyethylene oxide (PEO). It is desirable that the high solid MFC quickly disperses in water without forming lumps or larger flocs. The hydrogen blocking chemical is preferably added before or during the production of the MFC, i.e. to the cellulose fibers prior or during the enzymatic and/or mechanical treatment.

It has been found that by using a microfibrillated produced by enzymatic treatment the stability of the adhesive produced is more stable. One theory for this result is that the crystallinity of the enzymatic produced MFC is increased. Increased crystallinity makes it easier to predict the swelling of the MFC in the adhesive. The enzymes used for the production of MFC is preferably affecting hemicellulose, such as xylanase or mannase or an enzyme affecting cellulose, such as cellulase. The enzyme will decompose the cellulosic fibers in such was that the crystallinity is increased. The enzymatic treatment to produce MFC can either be done alone or in combination with a mechanical treatment. The enzymatic treatment will facilitate the mechanical treatment and thus also facilitate the production of MFC.

Another advantage with the use of MFC produced by enzymatic treatment is that the MFC will comprise saccharides, e.g. mono-, di-, oligo- and/or polysaccharides (not including polysaccharides in fiber o fibril form) which will improve the rheology properties of the MFC suspension. Thus, it will be easier to handle the MFC suspension at high consistencies. Also, the presence of saccharides will also improve the stability of the adhesive since they also tend to prevent or reduce gelling. The adhesive may preferably comprises saccharides in an amount of 0.1-15% by weight based on the amount of microfibrillated cellulose, preferably between 0.5-10% by weight.

By using enzymatic treatment of MFC it is also possible to produce a MFC suspension with high consistency, i.e. it is not necessary to dewater the suspension prior to addition of the suspension comprising MFC. It is preferred not to dewater the suspension comprising MFC before addition to the suspension comprising starch.

The adhesive is an aqueous-based adhesive that is based on starch that can be extracted from a wide variety of plants. Some of the most common plants are maize, wheat, rice, potato, tapioca and peas. The starch is preferably native, i.e. no modification of the starch has been done. The adhesive may also comprise water, sodium hydroxide, modified starch, dextrin and/or boric acid. Other additives, such as additives to improve the wet strength or adhesive bond strength could also be added. Also, other functional chemicals in order to improve e.g. moisture resistance or gelling behavior can be added, e.g. borax, glyoxal or mixtures thereof.

The adhesive preferably comprises a raw starch component. The adhesive may also comprise a starch carrier medium. With raw starch component is meant an uncooked starch granule that could be partly swollen by for example alkali treatment, temperature treatment and/or by other treatments known in prior art. With starch carrier medium is meant a cooked dissolved starch or a cold water dissolvable starch. The suspension comprising microfibrillated cellulose may be added to the suspension comprising starch before or during the swelling or the cooking of the starch. It may also be possible to add the suspension comprising microfibrillated cellulose after the swelling or the cooking treatment. The suspension comprising microfibrillated cellulose might be added to the starch suspension together or separately with any other additive, for example together with a raw starch component, alkali and/or borax.

The viscosity of adhesive depends on numerous parameters but including type of starch, modification, additives, temperatures, pH, solid content and ionic strength. The use of MFC in the adhesive reduces the uncontrolled retrogradation of the starch.

The adhesive is formed by mixing the components of the adhesive including starch and microfibrillated cellulose in any conventional way as described in prior art and which will is well known for a person skilled in the art. It is preferred that the adhesive is formed by including the steps of swelling the starch by alkali or temperature treatment to form a raw starch component and adding the microfibrillated cellulose either before, during or after the swelling of the starch. The adhesive may also be formed by cooking the starch to form a starch carrier medium and adding the microfibrillated cellulose either before, during or after cooking of the starch. The microfibrillated cellulose is preferably added to the starch in the form of an aqueous suspension, in dewatered, concentrated and/or dry form. It may be preferred to increase the temperature of the added microfibrillated cellulose, preferably the suspension comprising MFC before addition to the starch. This is especially important if the temperature of the starch is increased. By heating also the MFC before the addition the temperature difference between the starch and the MFC is reduced which will lead to that a more homogenous adhesive is formed. The temperature of the added microfibrillated cellulose is preferably above 30°C, more preferably above 50 °C, even more preferably above 70°C. The temperature of the MFC may be between 50-90°C, more preferably between 60-80°C. Furthermore, the pH of the microfibrillated cellulose added, preferably the suspension comprising microfibrillated cellulose is adjusted so that the pH of the MFC is similar to the pH of the starch or mixture comprising starch to which the MFC is added.

The mixture of MFC and starch may also be mechanical or temperature treated during formation of the adhesive. For example high shear mixing and/or jet cooking can be used.

The present invention also relates to a corrugated board comprising a corrugated medium and a liner and an adhesive arranged between the corrugated medium and the liner so that the corrugated medium is attached to the liner wherein the adhesive comprises starch and a high consistency microfibrillated cellulose characterized by that the microfibrillated cellulose of the adhesive has a solid content above 10% by weight. The corrugated board comprises at least one corrugated medium and at least one liner. The corrugated board preferably comprises at least two liners and at least one corrugated medium. The corrugated board may also comprise more than one corrugated mediums and more than two liners. The liner is attached to at least one surface of the corrugated medium by the adhesive. The adhesive is preferably applied on a least one surface of the fluted corrugated medium and the liner is thereafter attached to said surface.

The corrugated board liner/s and/or corrugated medium may be produced by any kind of pulp, e.g. chemical pulp, mechanical pulp, thermomechanical pulp and chemi-thermomechanical pulp (CTMP), and neutral sulphite semi-chemical (NSSC) pulp. The pulp may further be any one of a virgin and a re-cycled pulp.

The corrugated board preferably comprises adhesive in an amount of 2-20 g/m² (dry).

The corrugated board preferably comprises a liner having a low grammage, preferably below 160 g/m². It is a surprise that even using low grammage liner the wash-boarding problems is strongly reduced by using the adhesive according to the invention. Consequently, the present invention makes it possible to produce a more light-weight product.

The present invention further relates to an adhesive for a corrugated board wherein said adhesive comprises starch and a high consistency microfibrillated cellulose said microfibrillated cellulose has a solid content above 10 by weight during the production of the adhesive.

The adhesive preferably comprises 0.1-50 wt-% of microfibrillated cellulose based on total dry solid content of the adhesive.

The solid content of the adhesive is preferably between 10-45% by weight. By the present invention it is possible to produce a more high dry content adhesive.

Microfibrillated cellulose (MFC) shall in the context of the patent application mean a nano scale cellulose particle fiber or fibril with at least one dimension less than 100 nm. MFC comprises partly or totally fibrillated cellulose or lignocellulose fibers. The liberated fibrils have a diameter less than 100 nm, whereas the actual fibril diameter or particle size distribution and/or aspect ratio (length/width) depends on the source and the manufacturing methods. The smallest fibril is called elementary fibril and has a diameter of approximately 2-4 nm (see e.g. Chinga-Carrasco, G., Cellulose fibres, nanofibrils and microfibrils, : The morphological sequence of MFC components from a plant physiology and fibre technology point of view, Nanoscale research letters 2011, 6:417), while it is common that the aggregated form of the elementary fibrils, also defined as microfibril (Fengel, D., Ultrastructural behavior of cell wall polysaccharides, Tappi J., March 1970, Vol 53, No. 3.), is the main product that is obtained when making MFC e.g. by using an extended refining process or pressure-drop disintegration process. Depending on the source and the manufacturing process, the length of the fibrils can vary from around 1 to more than 10 micrometers. A coarse MFC grade might contain a substantial fraction of fibrillated fibers, i.e. protruding fibrils from the tracheid (cellulose fiber), and with a certain amount of fibrils liberated from the tracheid (cellulose fiber).

There are different acronyms for MFC such as cellulose microfibrils, fibrillated cellulose, nanofibrillated cellulose, fibril aggregates, nanoscale cellulose fibrils, cellulose nanofibers, cellulose nanofibrils, cellulose microfibers, cellulose fibrils, microfibrillar cellulose, microfibril aggregrates and cellulose microfibril aggregates. MFC can also be characterized by various physical or physical-chemical properties such as large surface area or its ability to form a gel-like material at low solids (1-5 wt%) when dispersed in water. The cellulose fiber is preferably fibrillated to such an extent that the final specific surface area of the formed MFC is from about 10 to about 300 m²/g, or more preferably 30-200 m²/g when determined for a freeze-dried material with the BET method.

Various methods exist to make MFC, such as single or multiple pass refining, pre-hydrolysis followed by refining or high shear disintegration or liberation of fibrils. One or several pre-treatment step is usually required in order to make MFC manufacturing both energy efficient and sustainable. The cellulose fibers of the pulp to be supplied may thus be pre-treated enzymatically or chemically, for example to reduce the quantity of hemicellulose or lignin. The cellulose fibers may be chemically modified before fibrillation, wherein the cellulose molecules contain functional groups other (or more) than found in the original cellulose. Such groups include, among others, carboxymethyl (CMC), aldehyde and/or carboxyl groups (cellulose obtained by N-oxyl mediated oxydation, for example "TEMPO"), or quaternary ammonium (cationic cellulose). After being modified or oxidized in one of the above-described methods, it is easier to disintegrate the fibers into MFC or nanofibrillar size or NFC.

The nanofibrillar cellulose may contain some hemicelluloses; the amount is dependent on the plant source. Mechanical disintegration of the pre-treated fibers, e.g. hydrolysed, pre-swelled, or oxidized cellulose raw material is carried out with suitable equipment such as a refiner, grinder, homogenizer, colloider, friction grinder, ultrasound sonicator, fluidizer such as microfluidizer, macrofluidizer or fluidizer-type homogenizer. Depending on the MFC manufacturing method, the product might also contain fines, or nanocrystalline cellulose or e.g. other chemicals present in wood fibers or in papermaking process. The product might also contain various amounts of micron size fiber particles that have not been efficiently fibrillated. MFC is produced from wood cellulose fibers, both from hardwood or softwood fibers. It can also be made from microbial sources, agricultural fibers such as wheat straw pulp, bamboo, bagasse, or other non-wood fiber sources. It is preferably made from pulp including pulp from virgin fiber, e.g. mechanical, chemical and/or thermomechanical pulps. It can also be made from broke or recycled paper.

The above described definition of MFC includes, but is not limited to, the new proposed TAPPI standard W13021 on cellulose nanofibril (CNF) defining a cellulose nanofiber material containing multiple elementary fibrils with both crystalline and amorphous regions, having a high aspect ratio with width of 5-30nm and aspect ratio usually greater than 50.

### Example:

Different adhesives were prepared as described below, i.e. according to the Stein Hall method.

A pre-swelled starch batch ("Reference 0") was first prepared by mixing starch granules (barley starch) into water and then pH was increased by addition of NaOH so that the total concentration of NaOH was about 1 wt%, simultaneously the temperature was raised to 40-45°C. The starch batch was thereafter mixed for about 15 min before additional starch and additives were added as described below. The concentration of the starch was 9 wt%
Reference 1. Comparative example - starch based adhesive. 202 g. Pre-swelled starch ("0") was mixed with 433 g starch paste (35%), and 65 g water which were then mixed at elevated temperature. (The starch granules were dispersed in water at ca 30-35°C thus forming a "starch dispersion or starch paste")
Reference 2. Comparative example: Starch based adhesive with 5wt% MFC-A. 202 g of pre-swelled starch was mixed with 71 g of MFC-A (4.5 wt%) and 400 g of starch paste (35 wt%).
Reference 3. Test 1 (5 wt% addition of MFC-B at 2 wt%). 202 g of pre-swelled starch was mixed with 29 g of MFC-B (2 wt%) and 401 g of starch paste (35 wt%)
Reference 4. Test 2 (5wt% addition of MFC-B at 4 wt%). 202 g of pre-swelled starch was mixed with 202 g of MFC-B1 (4 wt%) and 387 g. of starch paste (35 wt%)
Reference 5. Test 3 (5wt% addition of MFC-B at 8 wt%). 202 g of pre-swelled starch was mixed with 101,6 g of MFC-B1 (8 wt%) and 387 g. of starch paste (35 wt%)
Reference 6. Test 4 (5 wt% addition of MFC-B at 11,25 wt%). 202 g of pre-swelled starch was mixed with 72 g of the high solid content. MFC (11,25 wt%) and 387 g. starch paste (35 wt%)

The MFC-A was prepared at a solid content of 4.5% by mechanically refining enzyme treated kraft pulp and homogenizing until the gel became partially transparent and viscous.

The MFC-B was produced at a solid content of 12.2% by combined enzymatic treatment and mechanical treatment. The sample was diluted to different solid contents in order to demonstrate the effect of the different solid contents of MFC in adhesive.

Water retention was measured with the static water retention method according to TAPPI Test Method T 701 pm 01.

Viscosity was measured using a Brookfield rheometer, i.e. at 100 rpm according to the SCAN-P 50:84

The low consistency MFC was a commercial MFC which is made by mechanical disintegration of the fibers.

The results are presented in Table 1.

**Table 1. Results**

| **Adhesive** | | **0** | **1** | **2** | **3** | **4** | **5** | **6** |
|---|---|---|---|---|---|---|---|---|
| **pH End** | | 13 | 12,5 | 12,4 | 12,5 | 12,5 | 12,3 | 12,3 |
| **Viscosity 100 rpm** | cp | 2400 | 430 | 3400 | 1900 | 833 | 1225 | 1020 |
| **Temperature** | °C | 40 | 35 | 38 | 34 | 33 | 40 | 39 |
| **Water retention** | g/m² | | 963 | 157 | 244 | 195 | 153 | 132 |
| **Solid content** | wt% | 9 | 25,5 | 20,4 | 26,8 | 21,6 | 24,9 | 24 |

The Reference "0" is the starch base (only starch and NaOH and water, pre-swelling)

As can be seen from the results above the adhesive comprising MFC-A ("Reference 2") results in an adhesive with very high viscosity and water retention value even though the solid content of the adhesive is relative low. The adhesives 3-5 all have lower viscosity and water retention value compared to adheisve 2, however, the water retention values of these adhesives are still quite high. The best results can be seen for adhesive 6 which is produced according to the present invention where the viscosity and water retention value at a relative high solid content all show good values. Consequently, the present invention makes it possible to produce an adhesive showing improved viscosity which leads to improved adhesive setting behavior and spreading properties at the same time as the water retention value is good which will lead to an better control of the concentration of the adhesion on the added substrate which will decrease problems with washboarding and warp for corrugated boards.

In view of the above detailed description of the present invention, other modifications and variations will become apparent to those skilled in the art. However, it should be apparent that such other modifications and variations may be effected without departing from the scope of the invention as defined in the claims.

## Claims

1. A method for the production of an adhesive wherein said method comprise the following steps:
- providing a suspension comprising starch,
- swelling the starch by alkali or temperature treatment or by cooking the starch suspension to form a starch suspension,
- providing a suspension comprising microfibrillated cellulose which suspension has a solid content above 10%-by weight,
- adding the suspension comprising microfibrillated cellulose to the suspension comprising starch either before or during the swelling or the cooking of the starch or to the formed starch suspension to produce the adhesive.

2. The method according to claim 1 wherein the adhesive comprises starch in an amount above 50 wt% of the total solid content of the adhesive.

3. The method according to any of the preceding claims wherein the adhesive comprises microfibrillated cellulose in an amount between 0.5-50 wt-% of the total solid content of the adhesive.

4. The method according to any of the preceding claims wherein the starch in the adhesive is a native starch.

5. The method according to any of the preceding claims wherein the microfibrillated cellulose is produced by enzymatic treatment.

6. The method according to claim 5 wherein the microfibrillated cellulose is produced by combined enzymatic and mechanical treatment.

7. The method according to any of the claims 5 or 6 wherein the suspension comprising microfibrillated cellulose also comprises saccharides.

8. The method according to any of the preceding claims wherein the temperature of the added microfibrillated cellulose is above 30°C.

9. A corrugated board comprising a corrugated medium and a liner and an adhesive arranged to attach the fluted corrugated medium to the liner wherein the adhesive comprises starch being swollen by alkali or temperature treatment or by cooking and a high consistency microfibrillated cellulose **characterized by** that the microfibrillated cellulose suspension of the adhesive, added to the suspension comprising starch during the production of the adhesive, has a solid content above 10% by weight.

10. The corrugated board according to claim 9 wherein the board comprises adhesive in an amount of 2-20 g/m² (dry).

11. The corrugated board according to claim 9 or 10 wherein the liner of the corrugated board has a grammage below 160 g/m².

12. An adhesive wherein said adhesive comprises starch being swollen by alkali or temperature treatment or by cooking and a high consistency microfibrillated cellulose **characterized in that** the microfibrillated cellulose suspension, added to the suspension comprising starch during the production of the adhesive has a solid content above 10% by weight.

13. The adhesive according to claim 12 wherein the adhesive comprises between 0.1-50 wt-% of microfibrillated cellulose based on total dry solid content of the adhesive.

14. The adhesive according to any of the claims 12 or 13 wherein the adhesive has a solid content of 10-45 wt-%.

15. The adhesive according to any of the claims 12-14 wherein the adhesive comprises saccharides.

## Patentansprüche

1. Verfahren zur Herstellung eines Klebstoffs, wobei das Verfahren die folgenden Schritte umfasst:
- Bereitstellen einer Suspension, die Stärke umfasst,
- Aufquellen der Stärke durch Alkali- oder Temperaturbehandlung oder durch Kochen der Stärkesuspension, um eine Stärkesuspension zu bilden,
- Bereitstellen einer Suspension, die mikrofibrillierte Cellulose umfasst, wobei die Suspension einen Feststoffgehalt von mehr als 10 Gew.-% aufweist,
- Zugeben der mikrofibrillierte Cellulose umfassenden Suspension zu der Stärke umfassenden Suspension entweder vor oder während des Aufquellens oder des Kochens der Stärke oder zu der gebildeten Stärkesuspension, um den Klebstoff herzustellen.

2. Verfahren nach Anspruch 1, wobei der Klebstoff Stärke in einer Menge von mehr als 50 Gew.-% des Gesamtfeststoffgehalts des Klebstoffs umfasst.

3. Verfahren nach einem der vorhergehenden Ansprüche, wobei der Klebstoff mikrofibrillierte Cellulose in einer Menge von 0,5-50 Gew.-% des Gesamtfeststoffgehalts des Klebstoffs umfasst.

4. Verfahren nach einem der vorhergehenden Ansprüche, wobei die Stärke in dem Klebstoff eine native Stärke ist.

5. Verfahren nach einem der vorhergehenden Ansprüche, wobei die mikrofibrillierte Cellulose durch enzymatische Behandlung hergestellt wird.

6. Verfahren nach Anspruch 5, wobei die mikrofibrillierte Cellulose durch kombinierte enzymatische und mechanische Behandlung hergestellt wird.

7. Verfahren nach einem der Ansprüche 5 oder 6, wobei die mikrofibrillierte Cellulose umfassende Suspension auch Saccharide umfasst.

8. Verfahren nach einem der vorhergehenden Ansprüche, wobei die Temperatur der zugegebenen mikrofibrillierten Cellulose mehr als 30 °C beträgt.

9. Wellpappe, die einen Wellenstoff und ein Deckenpapier und einen Klebstoff, der dafür ausgelegt ist, den geriffelten Wellenstoff an dem Deckenpapier zu befestigen, umfasst, wobei der Klebstoff Stärke, die durch Alkali- oder Temperaturbehandlung oder durch Kochen aufgequollen wurde, und mikrofibrillierte Cellulose mit hoher Stoffdichte umfasst, **dadurch gekennzeichnet, dass** die Suspension mikrofibrillierter Cellulose des Klebstoffs, die der Stärke umfassenden Suspension während der Herstellung des Klebstoffs zugegeben wird, einen Feststoffgehalt von mehr als 10 Gew.-% aufweist.

10. Wellpappe nach Anspruch 9, wobei die Pappe einen Klebstoff in einer Menge von 2-20 g/m² (trocken) umfasst.

11. Wellpappe nach Anspruch 9 oder 10, wobei das Deckenpapier der Wellpappe ein Flächengewicht von weniger als 160 g/m² aufweist.

12. Klebstoff, wobei der Klebstoff Stärke, die durch Alkali- oder Temperaturbehandlung oder durch Kochen aufgequollen wurde, und mikrofibrillierte Cellulose mit hoher Stoffdichte umfasst, **dadurch gekennzeichnet, dass** die Suspension mikrofibrillierter Cellulose, die der Stärke umfassenden Suspension während der Herstellung des Klebstoffs zugegeben wird, einen Feststoffgehalt von mehr als 10 Gew.-% aufweist.

13. Klebstoff nach Anspruch 12, wobei der Klebstoff 0,1-50 Gew.-% mikrofibrillierte Cellulose, bezogen auf den Gesamttrockenfeststoffgehalt des Klebstoffs, umfasst.

14. Klebstoff nach einem der Ansprüche 12 oder 13, wobei der Klebstoff einen Feststoffgehalt von 10-45 Gew.-% aufweist.

15. Klebstoff nach einem der Ansprüche 12-14, wobei der Klebstoff Saccharide umfasst.

## Revendications

1. Procédé pour la production d'un adhésif, dans lequel ledit procédé comprend les étapes suivantes :
- la fourniture d'une suspension comprenant de l'amidon,
- le gonflement de l'amidon par traitement alcalin ou thermique ou par cuisson de la suspension d'amidon pour former une suspension d'amidon,
- la fourniture d'une suspension comprenant de la cellulose microfibrillée, ladite suspension ayant une teneur en matières solides supérieure à 10 % en poids,
- l'ajout de la suspension comprenant de la cellulose microfibrillée à la suspension comprenant de l'amidon soit avant, soit pendant le gonflement ou la cuisson de l'amidon ou à la suspension d'amidon formée pour produire l'adhésif.

2. Procédé selon la revendication 1 dans lequel l'adhésif comprend de l'amidon en une quantité supérieure à 50 % en poids de la teneur totale en matières solides de l'adhésif.

3. Procédé selon l'une quelconque des revendications précédentes dans lequel l'adhésif comprend de la cellulose microfibrillée en une quantité comprise entre 0,5 à 50 % en poids de la teneur totale en matières solides de l'adhésif.

4. Procédé selon l'une quelconque des revendications précédentes dans lequel l'amidon dans l'adhésif est un amidon natif.

5. Procédé selon l'une quelconque des revendications précédentes dans lequel la cellulose microfibrillée est produite par traitement enzymatique.

6. Procédé selon la revendication 5 dans lequel la cellulose microfibrillée est produite par un traitement enzymatique et mécanique combiné.

7. Procédé selon l'une quelconque des revendications 5 ou 6 dans lequel la suspension comprenant de la cellulose microfibrillée comprend également des saccharides.

8. Le procédé selon l'une quelconque des revendications précédentes dans lequel la température de la cellulose microfibrillée ajoutée est supérieure à 30 °C.

9. Carton ondulé comprenant un support ondulé et une doublure et un adhésif agencé pour fixer le support ondulé cannelé à la doublure, dans lequel l'adhésif comprend de l'amidon gonflé par un traitement alcalin ou thermique ou par cuisson et une cellulose microfibrillée de haute consistance **caractérisé en ce que** la suspension de cellulose microfibrillée de l'adhésif, ajoutée à la suspension comprenant de l'amidon pendant la production de l'adhésif, a une teneur en matières solides supérieure à 10 % en poids.

10. Carton ondulé selon la revendication 9 dans lequel le carton comprend un adhésif en une quantité de 2 à 20 g/m² (à sec).

11. Carton ondulé selon l'une quelconque des revendications 9 ou 10 dans lequel la doublure a un grammage inférieur à 160 g/m².

12. Adhésif dans lequel ledit adhésif comprend de l'amidon gonflé par un traitement alcalin ou thermique ou par cuisson et une cellulose microfibrillée de haute consistance **caractérisé en ce que** la suspension de cellulose microfibrillée, ajoutée à la suspension comprenant de l'amidon pendant la production de l'adhésif, a une teneur en matières solides supérieure à 10 % en poids.

13. Adhésif selon la revendication 12 dans lequel l'adhésif comprend entre 0,1 à 50 % en poids de cellulose microfibrillée sur la base de la teneur totale en matières solides sèches de l'adhésif.

14. Adhésif selon l'une quelconque des revendications 12 ou 13 dans lequel l'adhésif a une teneur en matières solides de 10 à 45 % en poids.

15. Adhésif selon l'une quelconque des revendications 12 à 14 dans lequel l'adhésif comprend des saccharides.
